(19) 

Europäisches
Patentamt
European
Patent Office
Office européen
des brevets

(11) **EP 2 862 608 A1**

(12) **EUROPEAN PATENT APPLICATION**
published in accordance with Art. 153(4) EPC

(43) Date of publication:
**22.04.2015 Bulletin 2015/17**

(21) Application number: **13804879.8**

(22) Date of filing: **10.06.2013**

(51) Int Cl.:
**B01D 21/02** (2006.01)   **B01D 21/26** (2006.01)
**B01D 47/00** (2006.01)   **B01D 47/02** (2006.01)
**B01D 47/06** (2006.01)   **B63H 21/32** (2006.01)
**F02M 25/07** (2006.01)   **B63B 25/08** (2006.01)
**B63J 2/08** (2006.01)

(86) International application number:
**PCT/JP2013/003628**

(87) International publication number:
**WO 2013/187038 (19.12.2013 Gazette 2013/51)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **11.06.2012 JP 2012132293
11.06.2012 JP 2012132294
11.06.2012 JP 2012132295**

(71) Applicant: **Kawasaki Jukogyo Kabushiki Kaisha
Kobe-shi, Hyogo 650-8670 (JP)**

(72) Inventors:
• **NISHIYAMA, Ai
Hyogo 673-8666 (JP)**

• **HIRATA, Shigehide
Hyogo 673-8666 (JP)**
• **INOMATA, Akihiko
Hyogo 673-8666 (JP)**
• **HIGASHIDA, Masanori
Hyogo 650-8670 (JP)**
• **NOGAMI, Tetsuo
Hyogo 650-8670 (JP)**
• **INDOH, Naoko
Hyogo 650-8670 (JP)**

(74) Representative: **Witte, Weller & Partner
Patentanwälte mbB
Königstrasse 5
70173 Stuttgart (DE)**

(54) **WASTEWATER TREATMENT DEVICE, WASTEWATER TREATMENT SYSTEM, EXHAUST GAS RECIRCULATION UNIT, ENGINE SYSTEM, AND SHIP**

(57)    A wastewater treatment unit (32) according to the present invention is a wastewater treatment unit configured to remove particulate matter from scrubber wastewater containing the particulate matter and includes: a settling separation portion (40) including an inclined surface (48) inclined at a predetermined angle relative to a horizontal direction, the settling separation portion (40) being configured to settle down the particulate matter on the inclined surface (48) to separate the particulate matter from the scrubber wastewater; and a centrifugal separation portion (60) provided downstream of the settling separation portion (40), the centrifugal separation portion (60) being configured to separate the particulate matter from the scrubber wastewater by a centrifugal separation treatment.

Fig. 2

**EP 2 862 608 A1**

## Description

Technical Field

The present invention relates to a wastewater treatment unit configured to remove particulate matter from scrubber wastewater containing the particulate matter. The present invention also relates to a wastewater treatment system, an exhaust gas recirculation unit, an engine system, and a ship, each of which includes the wastewater treatment unit.

Background Art

As a technology for reducing the amount of nitrogen oxide (NOx) contained in an exhaust gas discharged from an engine of a large ship, there is an exhaust gas recirculation (EGR) technology of returning the exhaust gas to the engine. In the exhaust gas recirculation of the engine of the large ship using heavy oil as a fuel, when returning the exhaust gas to the engine, suspended particulate matters (SPM), such as carbon, suspended in the exhaust gas need to be removed. As a device configured to remove the suspended particulate matters from the exhaust gas, there is a scrubber that uses clean water.

The clean water that has been used by the scrubber to become wastewater (hereinafter referred to as "scrubber wastewater") contains a large amount of particulate matter (solid particles, such as soot). Therefore, the turbidity of the wastewater is extremely high, so that the wastewater cannot be discharged to the outside of the ship as is. For example, according to the guideline of the IMO (International Maritime Organization), a washwater discharge criteria of the turbidity is defined as 25 NTU (Nephelometric Turbidity Units). However, the turbidity of the above-described scrubber wastewater is, for example, about 5,000 NTU. Therefore, in order to discharge the scrubber wastewater to the outside of the ship, the particulate matter contained in the scrubber wastewater needs to be removed in some way.

Here, PTL 1 proposes a wastewater treatment unit including a centrifugal separation portion configured to separate the particulate matter from the water (i.e., the scrubber wastewater) used for cleaning the exhaust gas. To be specific, according to the invention described in PTL 1, the particulate matter is removed from the scrubber wastewater by using a centrifugal separator.

A purification plant for purifying, for example, water drawn from a river is provided with a facility, called a settling tank. In the settling tank, foreign matters, such as sand, contained in the drawn water can be settled down to be removed. There is a case where the settling tank is provided with a large number of inclined tubes (tubes inclined at a predetermined angle relative to a horizontal direction) (see PTLs 2 and 3, for example). A sinking distance of the foreign matter to an inclined surface of the inclined tube is shorter than a sinking distance of the foreign matter to a bottom of the settling tank. Therefore, the settling of the foreign matter on the inclined surface of the inclined tube is quicker than the settling of the foreign matter on the bottom of the settling tank. On this account, the treatment ability of the purification plant can be improved by providing the inclined tubes in the settling tank.

Citation List

Patent Literature

PTL 1: Japanese Laid-Open Patent Application Publication No. 2004-81933
PTL 2: Japanese Laid-Open Patent Application Publication No. 2001-276844
PTL 3: Japanese Laid-Open Patent Application Publication No. 2002-346581

Summary of Invention

Technical Problem

It was found from experiments by the present inventors that in the case of using a common industrial centrifugal separator, the centrifugal separation treatment needs to be performed two or three times in order that the turbidity of the scrubber wastewater becomes equal to or lower than the washwater discharge criteria. Therefore, in a case where the turbidity of the scrubber wastewater is reduced to become equal to or lower than the washwater discharge criteria only by the centrifugal separator, the treated scrubber wastewater has to be repeatedly treated by two or three centrifugal separators provided in series or by the centrifugal separator having the treatment ability that is two to three times the treatment ability of the normal centrifugal separator. In any case, the entire wastewater treatment unit becomes large, and a large amount of energy (electric power) becomes necessary for treating the scrubber wastewater.

In the industrial centrifugal separator, a large number of conical-shaped members configured to generate centrifugal force are lined up in an axial direction. An interval between the adjacent conical-shaped members is about 0.5 mm, that is, extremely narrow. However, the scrubber wastewater contains not only the particulate matter of small diameter but also the particulate matter of large diameter larger than 0.5 mm. Therefore, in a case where the scrubber wastewater is treated only by the centrifugal separator, the particulate matter easily clogs in the centrifugal separator, and maintenance needs to be performed frequently. As above, since the centrifugal separator utilizes the centrifugal force, it is suitable for the treatment of removing the particulate matter of small diameter from the scrubber wastewater but unsuitable for the treatment of removing the particulate matter of large diameter.

There may be a method of increasing the interval between the conical-shaped members of the centrifugal separator to prevent the particulate matter from clogging in the centrifugal separator. However, this is not preferable since the efficiency of the separation treatment deteriorates. There may be another method of providing a filter at a position upstream of the centrifugal separator. However, as with the above, the filter is soon clogged by the particulate matter of large diameter, and the maintenance needs to be performed frequently.

Further, although the above-described settling tank is used to purify, for example, water drawn from a river, the present inventors have verified whether or not the settling tank can be utilized as a device that removes the particulate matter from the scrubber wastewater. As a result, it was found that in a case where the scrubber wastewater is supplied to a container provided with a large number of inclined tubes, the following problems occur. To be specific, as compared to sand and the like, the particulate matter removed from the scrubber wastewater receives high frictional force from the inclined surface of the inclined tube in spite of its mass. Therefore, it was found that there is a case where the settled particulate matter is accumulated on the inclined tube without slipping down, and this deteriorates the treatment ability.

The present invention was made in consideration of the above circumstances, and an object of the present invention is to provide a wastewater treatment unit, which can operate with low energy, is easy to maintenance, can be reduced in its installation space, and can remove particulate matter from scrubber wastewater with a high degree of accuracy.

**Solution to Problem**

A wastewater treatment unit according to one aspect of the present invention is a wastewater treatment unit configured to remove particulate matter from scrubber wastewater containing the particulate matter, the wastewater treatment unit including: a settling separation portion including an inclined surface inclined at a predetermined inclination angle relative to a horizontal direction, the settling separation portion being configured to settle down the particulate matter on the inclined surface to separate the particulate matter from the scrubber wastewater; and a centrifugal separation portion provided downstream of the settling separation portion, the centrifugal separation portion being configured to separate the particulate matter from the scrubber wastewater by a centrifugal separation treatment.

The settling separation portion provided at an upstream side in the wastewater treatment unit separates the particulate matter by the settling. Therefore, a large amount of energy is unnecessary to operate the settling separation portion, and the particulate matter of large diameter hardly clogs in the settling separation portion. The centrifugal separation portion provided at a downstream side in the wastewater treatment unit separates the particulate matter by the centrifugal separation treatment. Therefore, the centrifugal separation portion can remove the particulate matter of small diameter with a high degree of accuracy. On this account, according to the wastewater treatment unit, the separation portions that complement each other are arranged at optimal positions, so that the wastewater treatment unit can operate with low energy, is easy to maintenance, can be reduced in its installation space, and can remove the particulate matter from the scrubber wastewater with a high degree of accuracy.

An exhaust gas recirculation unit according to one aspect of the present invention is an exhaust gas recirculation unit configured to return an exhaust gas of a diesel engine to the diesel engine, the exhaust gas recirculation unit including: a scrubber configured to clean the exhaust gas to discharge scrubber wastewater; and the above wastewater treatment unit configured to remove the particulate matter from the scrubber wastewater discharged from the scrubber.

A wastewater treatment unit according to one aspect of the present invention is a wastewater treatment unit configured to remove particulate matter from scrubber wastewater containing the particulate matter, the wastewater treatment unit including a settling separation portion configured to settle down the particulate matter to separate the particulate matter from the scrubber wastewater, wherein the settling separation portion includes: a water tank into which the scrubber wastewater flows; a plurality of inclined tubes, which are provided in the water tank such that lower end portions thereof are located above a bottom surface of the water tank and through which the scrubber wastewater flows; and a vibration unit configured to vibrate the plurality of inclined tubes.

According to the above configuration, the inclined tubes are vibrated by the vibration unit. Therefore, the particulate matter accumulated in the inclined tubes easily falls down to the bottom surface of the water tank, and the particulate matter hardly clogs in the inclined tubes. It should be noted that the term "vibration (vibrate)" herein includes a vibration that is relatively long in period and "swing" that is short in period.

The above wastewater treatment unit may be configured such that: the water tank includes a top plate portion located above the inclined tubes and a water storage tube extending upward from the top plate portion; and the water tank is configured such that a water surface of the scrubber wastewater is positioned in the water storage tube. According to the above configuration, the water surface (free water surface) of the scrubber wastewater is not formed under the top plate portion. Therefore, the water surface of the scrubber wastewater does not significantly tremble by the vibrations of the vibration unit, and as a result, the bad influences on the sinking of the particulate matter can be prevented.

The above wastewater treatment unit may be configured such that the water storage tube is provided with an outflow port through which the scrubber wastewater having flowed through the inclined tubes is discharged. According to the above configuration, the outflow port is located above the top plate portion. Therefore, the water surface of the scrubber wastewater can be easily adjusted so as to be positioned in the water storage tube.

The above wastewater treatment unit may be configured such that the water tank further includes an air vent valve attached to the water storage tube and configured to manually or automatically discharge air in the water tank. According to the above configuration, the air in the water tank is appropriately discharged. Therefore, the water surface of the scrubber wastewater can be more surely caused to be positioned in the water storage tube.

An exhaust gas recirculation unit according to one aspect of the present invention is an exhaust gas recirculation unit configured to return an exhaust gas of a diesel engine to the diesel engine, the exhaust gas recirculation unit including: a scrubber configured to clean the exhaust gas to discharge scrubber wastewater; and the wastewater treatment unit configured to remove the particulate matter from the scrubber wastewater discharged from the scrubber, wherein the vibration unit vibrates the plurality of inclined tubes by using, as a vibration source, vibrations generated when the diesel engine operates.

According to the above configuration, the vibrations of the diesel engine are used as the vibration source of the vibration unit. Therefore, it is unnecessary to additionally provide a vibration device and the like, so that the configuration of the wastewater treatment unit can be simplified.

A ship according to one aspect of the present invention is a ship including an engine system, the engine system including a diesel engine and an exhaust gas recirculation unit configured to return an exhaust gas of the diesel engine to the diesel engine, wherein: the exhaust gas recirculation unit includes a scrubber configured to clean the exhaust gas to discharge scrubber wastewater and the above wastewater treatment unit configured to remove the particulate matter from the scrubber wastewater discharged from the scrubber; and the vibration unit vibrates the plurality of inclined tubes by using, as a vibration source, oscillations generated when the ship operates.

According to the above configuration, the oscillations of the ship are utilized as the vibration source of the vibration unit. Therefore, it is unnecessary to additionally provide the vibration device and the like, so that the configuration of the wastewater treatment unit can be simplified.

A wastewater treatment system according to one aspect of the present invention is a wastewater treatment system including a wastewater treatment unit configured to separate and remove particulate matter from scrubber wastewater containing the particulate matter, the wastewater treatment system being configured to heat the scrubber wastewater to not lower than a predetermined temperature at at least one of a timing before the scrubber wastewater contains the particulate matter, a timing while the scrubber wastewater is containing the particulate matter, and a timing after the scrubber wastewater contains the particulate matter, and supply the heated scrubber wastewater to the wastewater treatment unit.

Here, the present inventors found that contrary to the conventionally known theory regarding the flocculation and dispersion, the particulate matter (soot) contained in the water easily flocculates when the temperature of the water is high. The above wastewater treatment system is configured such that: the flocculation of the particulate matter is accelerated by heating the scrubber wastewater to not lower than the predetermined temperature; and the flocculated particulate matter is separated and removed from the scrubber wastewater. Therefore, according to the above wastewater treatment system, the particulate matter can be efficiently removed from the scrubber wastewater.

An exhaust gas recirculation unit according to one aspect of the present invention is an exhaust gas recirculation unit configured to return an exhaust gas of a diesel engine to the diesel engine, the exhaust gas recirculation unit including: a scrubber configured to clean the exhaust gas to discharge scrubber wastewater; and a wastewater treatment unit configured to separate and remove particulate matter from the scrubber wastewater, wherein the scrubber wastewater is heated in the scrubber by heat of the exhaust gas to not lower than a predetermined temperature, and the heated scrubber wastewater is supplied to the wastewater treatment unit.

According the exhaust gas recirculation unit, the scrubber wastewater is heated in the scrubber to not lower than the predetermined temperature, and the heated scrubber wastewater is supplied to the wastewater treatment unit. Therefore, the flocculation of the particulate matter is accelerated in the scrubber wastewater, and the wastewater treatment unit can efficiently remove the particulate matter from the scrubber wastewater.

The exhaust gas recirculation unit may further include: a coupling portion coupling the scrubber and the wastewater treatment unit; and a coupling portion keep-warm portion configured to keep warm the scrubber wastewater in the coupling portion. According to the above configuration, the temperature decrease of the scrubber wastewater flowing into the wastewater treatment unit can be suppressed. Therefore, the particulate matter can be removed more efficiently.

The exhaust gas recirculation unit may further include a device keep-warm portion configured to keep warm the scrubber wastewater in the wastewater treatment unit. According to the above configuration, the temperature decrease of the scrubber wastewater flowing into the wastewater treatment unit can be suppressed. Therefore, the particulate matter can be removed more efficiently.

In the exhaust gas recirculation unit, it is desirable that the scrubber wastewater be heated in the scrubber to not lower than 75°C. According to the above configuration, the scrubber wastewater that is adequately high in temperature flows into the wastewater treatment unit. Therefore, the particulate matter can be removed efficiently.

An engine system according to one aspect of the present invention includes a diesel engine and the above exhaust gas recirculation unit. A ship according to one aspect of the present invention includes the above engine system.

### Advantageous Effects of Invention

The above-described wastewater treatment unit can operate with low energy, is easy to maintenance, can be reduced in its installation space, and can remove the particulate matter from the scrubber wastewater with a high degree of accuracy.

### Brief Description of Drawings

Fig. 1 is a block diagram of an engine system according to Embodiment 1.
Fig. 2 is a block diagram of a wastewater treatment unit shown in Fig. 1.
Fig. 3 is a schematic diagram of a settling separation portion shown in Fig. 2.
Fig. 4 is a schematic diagram of a centrifugal separation portion shown in Fig. 2.
Fig. 5 is a block diagram of the engine system according to Embodiment 2.
Fig. 6 is a block diagram of the wastewater treatment unit shown in Fig. 5.
Fig. 7 is a schematic diagram of the settling separation portion shown in Fig. 6.
Fig. 8 is a schematic diagram of the settling separation portion of Embodiment 3.
Fig. 9 is a schematic diagram of the settling separation portion of Modification Example of Fig. 8.
Fig. 10 is a block diagram of a wastewater treatment system according to Embodiment 4.
Fig. 11 is a schematic diagram of the settling separation portion shown in Fig. 10.
Fig. 12 is a schematic diagram of the centrifugal separation portion shown in Fig. 10.
Fig. 13 is a block diagram of the engine system according to Embodiment 5.

### Description of Embodiments

Hereinafter, embodiments of the present invention will be explained in reference to the drawings. In the following explanations and drawings, the same reference signs are used for the same or corresponding components, and a repetition of the same explanation is avoided.

### Embodiment 1

First, Embodiment 1 will be explained.

### Engine System

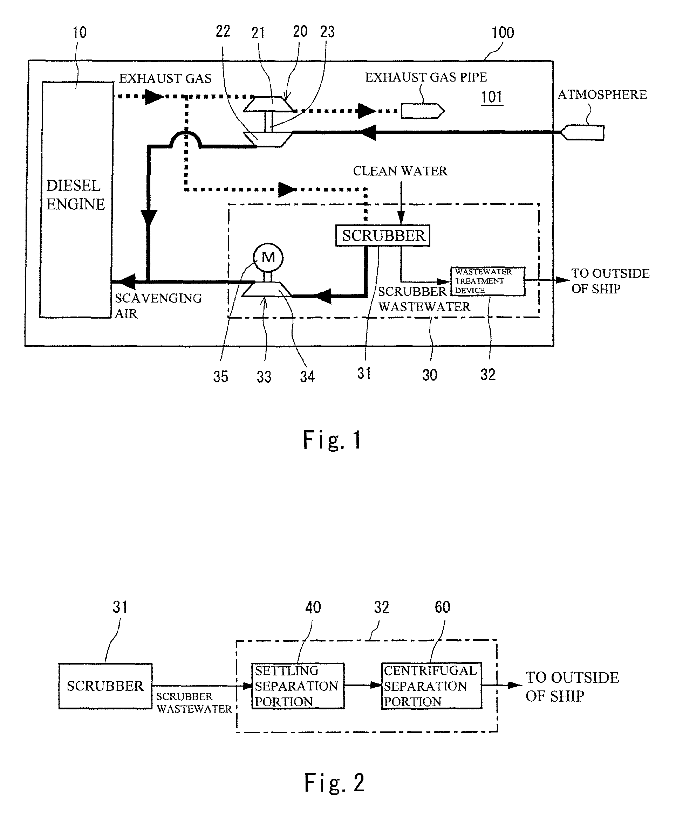

First, an engine system 101 according to the present embodiment will be explained. Fig. 1 is a block diagram of the engine system 101. In Fig. 1, thick solid lines denote the flow of a scavenging air (the term "scavenging air" is used for two-cycle engines, and the term "supply gas" is used for four-cycle engines, but in the following explanations, these are collectively called the "scavenging air"), and thick broken lines denote the flow of an exhaust gas. The engine system 101 according to the present embodiment is for a ship and mounted on a ship 100. As shown in Fig. 1, the engine system 101 includes a diesel engine 10, a turbocharger 20, and an exhaust gas recirculation unit 30.

The diesel engine 10 is a main component of the engine system 101. The diesel engine 10 is coupled to a propulsion propeller (not shown) and rotates this propeller. The diesel engine 10 of the present embodiment is an engine for a large ship and uses so-called heavy oil as a fuel. Therefore, the exhaust gas of the diesel engine 10 contains not only SOx but also a large amount of soot.

The turbocharger 20 is a device configured to supply compressed air to the diesel engine 10. The turbocharger 20 includes a turbine portion 21 and a compressor portion 22. The exhaust gas is supplied from the diesel engine 10 to the turbine portion 21, and the turbine portion 21 rotates by the energy of the exhaust gas. The turbine portion 21 and the compressor portion 22 are coupled to each other by a shaft portion 23. When the turbine portion 21 rotates, the compressor portion 22 also rotates. When the compressor portion 22 rotates, the air taken from outside is compressed, and the compressed air is supplied as the scavenging air to the diesel engine 10.

The exhaust gas recirculation unit 30 is a unit configured to return the exhaust gas to the diesel engine 10. The exhaust gas discharged from the diesel engine 10 is supplied to not only the turbocharger 20 but also the exhaust gas recirculation unit 30. Although details will be described later, suspended particulate matters are removed from the exhaust gas supplied to the exhaust gas recirculation unit 30, and the exhaust gas is then returned to the diesel engine 10. The concentration of oxygen in the exhaust gas discharged from the diesel engine 10 is low. Therefore, by returning the exhaust gas to the diesel engine 10, the combustion temperature decreases. As a result, the amount of NOx discharged from the diesel engine 10 can be reduced.

**Exhaust Gas Recirculation Unit**

Next, the exhaust gas recirculation unit 30 according to the present embodiment will be explained. As described above, the exhaust gas recirculation unit 30 is a unit configured to return the exhaust gas to the diesel engine 10. As shown in Fig. 1, the exhaust gas recirculation unit 30 includes a scrubber 31, a wastewater treatment unit 32, and an EGR blower 33.

The scrubber 31 is a device configured to remove the suspended particulate matters from the exhaust gas of the diesel engine 10. As described above, the exhaust gas of the diesel engine for the large ship contains a lot of suspended particulate matters. Therefore, the exhaust gas recirculation unit used in the large ship requires the scrubber. The scrubber 31 uses clean water to remove the suspended particulate matters from the exhaust gas. Examples of a method of removing the suspended particulate matters from the exhaust gas include: a method of causing the exhaust gas to flow through the clean water; a method of spraying the clean water to the exhaust gas; and a method of causing the exhaust gas to flow through a member impregnated with the clean water. Any of the above methods may be adopted. The clean water used in the scrubber 31 is discharged as scrubber wastewater to the wastewater treatment unit 32.

The wastewater treatment unit 32 is a device configured to treat the scrubber wastewater discharged from the scrubber 31. Since the scrubber wastewater contains a large amount of particulate matter that is concentrated suspended solids, it cannot be discharged to the outside of the ship as is. In the case of discharging the scrubber wastewater to the outside of the ship, the turbidity of the scrubber wastewater needs to be lowered to be equal to or lower than a predetermined value by the wastewater treatment unit 32. The scrubber wastewater discharged from the scrubber 31 contains the particulate matter of various particle diameters that are small to large diameters. The other details of the wastewater treatment unit 32 will be described later.

The EGR blower 33 is a device configured to pressurize the exhaust gas having flowed through the scrubber 31 and then return the pressurized exhaust gas as the scavenging air to the diesel engine 10. The EGR blower 33 includes a blower 34 and an electric motor 35. The blower 34 is driven by the electric motor 35. The exhaust gas from which the suspended particulate matters have been removed by the scrubber 31 is pressurized by the blower 34. The exhaust gas having been pressurized by the EGR blower 33 (blower 34) is mixed with the air, having been compressed by the turbocharger 20, to be supplied to the diesel engine 10.

**Wastewater Treatment Unit**

Next, the wastewater treatment unit 32 according to the present embodiment will be explained. The wastewater treatment unit 32 is a device configured to remove the particulate matter from the scrubber wastewater. Fig. 2 is a block diagram of the wastewater treatment unit 32. As shown in Fig. 2, the wastewater treatment unit 32 includes a settling separation portion 40 and a centrifugal separation portion 60 provided downstream of the settling separation portion 40.

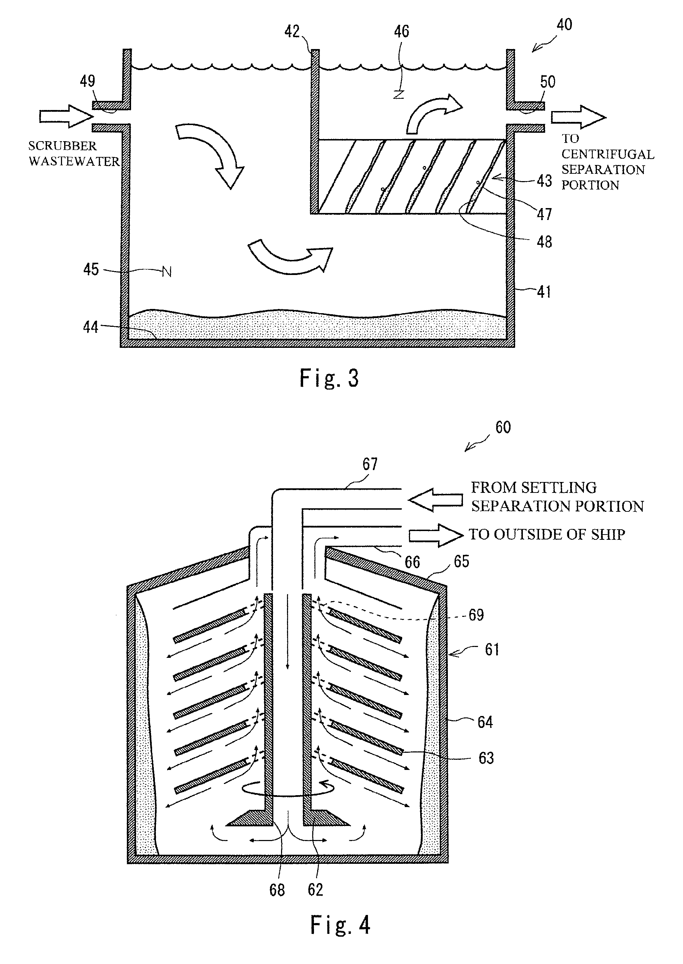

The settling separation portion 40 is a portion configured to settle down the particulate matter to remove the particulate matter from the scrubber wastewater. Fig. 3 is a schematic diagram of the settling separation portion 40 according to the present embodiment. For convenience sake, the following explanation will be made on the basis that upper, lower, left, and right sides on the sheet of Fig. 3 are respectively, simply referred to as upper, lower, left, and right sides. An upper-lower direction on the sheet of Fig. 3 corresponds to a vertical direction (gravitational direction). As shown in Fig. 3, the settling separation portion 40 is mainly constituted by a water tank 41, a partition plate 42, and an inclined tube group 43.

The water tank 41 is filled with the scrubber wastewater. The partition plate 42 is provided in the vicinity of a left-right direction middle portion of the water tank 41 and above a bottom surface 44 of the water tank 41. The inclined tube group 43 is provided between the partition plate 42 and a right side wall of the water tank 41. A lower end portion of the inclined tube group 43 is located above the bottom surface 44 of the water tank 41. Hereinafter, in the water tank 41, a region 45 including a region located at a left side of the inclined tube group 43 and a region located under the inclined tube group 43 is referred to as a "first region", and a region 46 (upper right region in the water tank 41) surrounded by the partition plate 42, the inclined tube group 43, and the right side wall of the water tank 41 is referred to as a "second region".

The inclined tube group 43 is located at a boundary between the first region 45 and the second region 46. The inclined tube group 43 is constituted by integrating a large number of inclined tubes 47 each of whose cross section in a horizontal direction is rectangular. Although Fig. 3 shows a plurality of inclined tubes 47 lined up in the left-right direction, a large number of inclined tubes 47 are actually lined up not only in the left-right direction but also in a depth direction on the sheet of Fig. 3. Lower portions of the inclined tubes 47 are open to the first region 45, and upper portions thereof are open to the second region 46. To be specific, the first region 45 communicates with the second region 46 through the inclined tubes 47. Each of the inclined tubes 47 is inclined at a predetermined tilt angle (60°, for example) relative to the horizontal direction. Therefore, each of the inclined tubes 47 includes an inclined surface 48, and the inclined surface 48 is inclined at the predetermined tilt angle relative to the horizontal direction to face obliquely upward (in an upper left direction).

An inflow port 49 that is open to the first region 45 is formed on a left side wall of the water tank 41. An outflow port 50 that is open to the second region 46 is formed on the right side wall of the water tank 41. As shown in Fig. 2, the scrubber wastewater flows from the scrubber 31 into the settling separation portion 40. The scrubber wastewater flows into the water tank 41 through the inflow port 49. As shown by arrows in Fig. 3, when the scrubber wastewater flows into the first region 45 of the water tank 41, the scrubber wastewater flows toward the bottom surface 44 of the water tank 41 (i.e., downward), flows through the inclined tubes 47 from the lower side to the upper side, flows into the second region 46, and is finally discharged from the outflow port 50.

As above, the scrubber wastewater having flowed into the water tank 41 surely flows through the inclined tubes 47. When the scrubber wastewater flows through the inclined tubes 47, the particulate matter in the scrubber wastewater settles down on the inclined surfaces 48 of the inclined tubes 47. If the particulate matter settles down on the bottom surface 44 of the water tank 41, the particulate matter has to keep on sinking for a relatively long distance in order to complete the settling of the particulate matter on the bottom surface 44. However, according to the present embodiment, since the particulate matter settles down on the inclined surfaces 48 of the inclined tubes 47, the settling of the particulate matter is completed by the sinking of a short distance. In addition, according to the present embodiment, since a large number of inclined tubes 47, that is, a large number of inclined surfaces 48 are arranged so as to be lined up, the total of the areas of surfaces on which the particulate matter settles down is extremely large. With this, according to the present embodiment, the settling of a large amount of particulate matter can be completed in a short period of time. When the particulate matter settled down on the inclined surfaces 48 of the inclined tubes 47 is accumulated to some degree, the particulate matter falls down on the bottom surface 44 of the water tank 41 by its own weight. After the particulate matter is separated (removed) as above, the scrubber wastewater is discharged through the outflow port 50 to the centrifugal separation portion 60.

As explained above, the settling separation portion 40 utilizes gravity to separate the particulate matter from the scrubber wastewater. Therefore, in order to operate the settling separation portion 40, high power is unnecessary. Further, the scrubber wastewater does not flow through a narrow space. Therefore, clogging hardly occurs even in a case where the scrubber wastewater contains the particulate matter of large diameter. Therefore, the settling separation portion 40 of the present embodiment can operate with low energy and is extremely easy to maintenance. In the case of treating the same amount of scrubber wastewater, the settling separation portion 40 can be configured to be smaller in size than the below-described centrifugal separation portion 60.

Next, the centrifugal separation portion 60 of the present embodiment will be explained. The centrifugal separation portion 60 is a portion configured to remove the particulate matter from the scrubber wastewater by a centrifugal separation treatment. Fig. 4 is a schematic diagram of the centrifugal separation portion 60 according to the present embodiment. As shown in Fig. 4, the centrifugal separation portion 60 includes a housing 61, a distributor 62, and a large number of discs 63.

The housing 61 is a container that houses the distributor 62 and the discs 63. The housing 61 includes a bowl 64 formed in a cylindrical shape and a separating disc 65 provided at the upper side of the bowl 64. A discharge port 66 penetrating the separating disc 65 is provided at a middle of the separating disc 65, and a supply port 67 penetrating the discharge port 66 is provided inside the discharge port 66.

The distributor 62 is a circular tube member housed in the housing 61. The distributor 62 communicates with the supply port 67 and extends along a central axis of the housing 61 (main body portion 64). Further, the distributor 62 rotates at high speed (10,000 rpm, for example) using an electric motor (not shown) as a driving source. As shown in Fig. 2, the scrubber wastewater discharged from the settling separation portion 40 flows into the centrifugal separation portion 60. Specifically, the scrubber wastewater flows through the supply port 67 into the distributor 62. Further, the scrubber wastewater having flowed into the distributor 62 flows through an outflow port 68, formed at a lower end of the distributor 62, into the housing 61.

The discs 63 are members that rotate together with the distributor 62. The discs 63 are lined up along an axial direction of the distributor 62 and directly fixed to the distributor 62. Each of the discs 63 has a conical shape and is provided with flow holes 69 lined up at regular intervals in a circumferential direction. An interval between the discs 63 is wide in Fig. 4 but is actually, extremely narrow. For example, the interval is 0.5 mm. To maintain this interval, in the present embodiment, for example, a spacer (not shown) having a thickness of 0.5mm is inserted between the discs 63.

The scrubber wastewater having flowed through the inside of the distributor 62 into the housing 61 flows through the flow holes 69 of the discs 63 to be discharged through the discharge port 66 to the outside of the ship. When the scrubber wastewater flows through the discs 63, the centrifugal force is applied to the scrubber wastewater, so that the particulate matter that is high in specific gravity is separated from the scrubber wastewater. The separated particulate matter is accumulated on an inner wall of the bowl 64. As above, after the particulate matter particles are forcibly separated from the scrubber wastewater having flowed into the centrifugal separation portion 60, the scrubber wastewater is discharged from the centrifugal separation portion 60 (housing 61).

The interval between the discs 63 constituting the centrifugal separation portion 60 is extremely narrow. Therefore, if the inflow scrubber wastewater contains a large amount of particulate matter of large diameter, the particulate matter soon clogs between the discs 63. In contrast, since the centrifugal separation portion 60 forcibly separates the particulate matter by utilizing the centrifugal force, it can separate the particulate matter of small diameter with a high degree of accuracy. To be specific, the centrifugal separation portion 60 is not good at removing the particulate matter of large diameter but is extremely effective when removing the particulate matter of small diameter.

As above, in the wastewater treatment unit 32 according to the present embodiment, the settling separation portion 40 effective for the removal of the particulate matter of large diameter is provided at an upstream side. The settling separation portion 40 can operate with low energy, is easy to maintenance, and can be configured to be smaller in size than the centrifugal separation portion 60. The centrifugal separation portion 60 effective for the removal of the particulate matter of small diameter is provided at a downstream side. Since the settling separation portion 40 is provided upstream of the centrifugal separation portion 60, the particulate matter of large diameter hardly flows into the centrifugal separation portion 60. As above, in the wastewater treatment unit 32 according to the present embodiment, the separation portions 40 and 60 that complement each other are arranged at optimal positions. Thus, the wastewater treatment unit 32 can operate with low energy, is easy to maintenance, can be reduced in its installation space, and can remove the particulate matter from the scrubber wastewater with a high degree of accuracy.

It was confirmed from the experiments by the present inventors that the turbidity of the scrubber wastewater whose turbidity was 5,000 NTU decreases to 110 NTU by causing the scrubber wastewater to flow through the settling separation portion 40. It was further confirmed that the turbidity of the scrubber wastewater whose turbidity was 110 NTU decreases to 5 NTU by causing the scrubber wastewater to flow through the centrifugal separation portion 60. Therefore, in the case of the scrubber wastewater whose turbidity is about 5,000 NTU, the turbidity of the scrubber wastewater can be reduced to be equal to or lower than 25 NTU that is the washwater discharge criteria defined in the guideline of the IMO by causing the scrubber wastewater to flows through the wastewater treatment unit 32 of the present embodiment only once. As a result, the scrubber wastewater can be discharged to the outside of the ship.

The foregoing has explained Embodiment 1. The foregoing has explained the wastewater treatment unit 32 configured to treat the scrubber wastewater having been used to clean the exhaust gas of the diesel engine 10. However, the wastewater treatment unit may treat the scrubber wastewater having been used to clean the exhaust gas of a boiler or the exhaust gas of an incinerator.

Embodiment 2

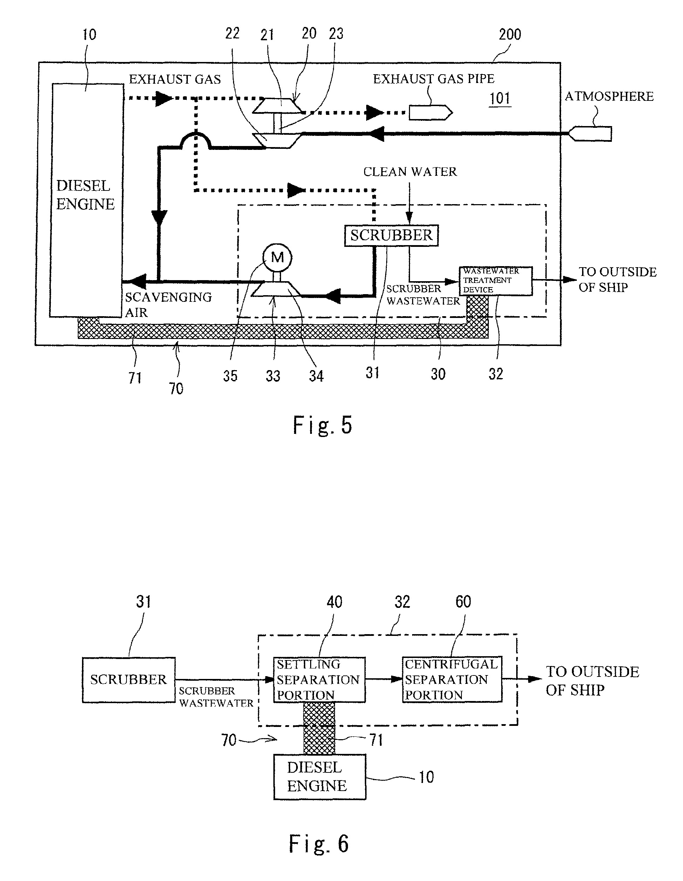

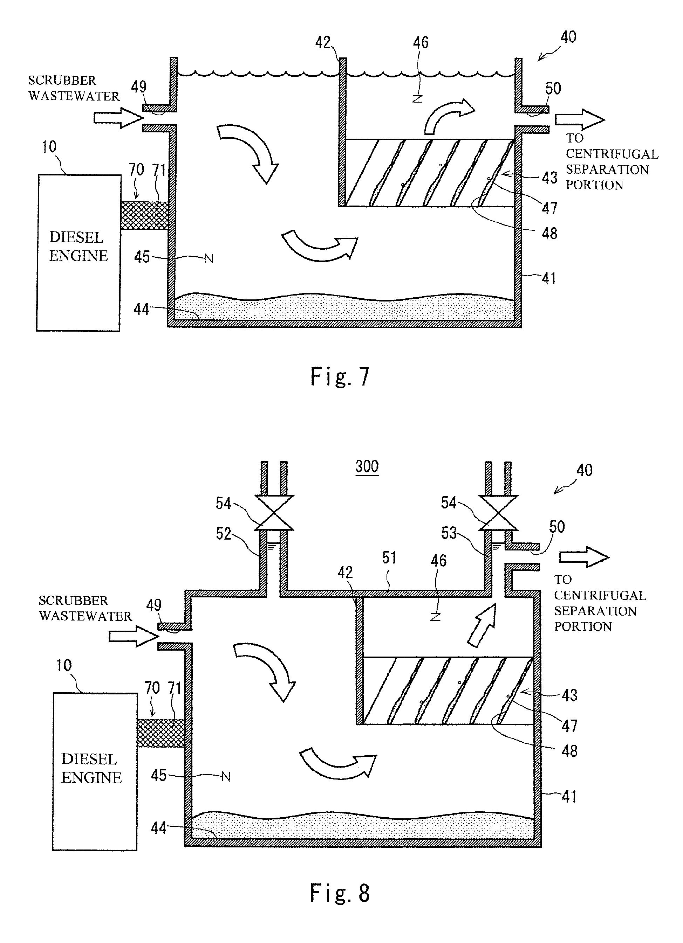

Next, Embodiment 2 will be explained. Fig. 5 is a block diagram of the engine system 101 according to the present embodiment. Fig. 6 is a block diagram of the wastewater treatment unit 32 shown in Fig. 7. Fig. 7 is a schematic diagram of the settling separation portion 40 shown in Fig. 6. As shown in Figs. 5 to 7, Embodiment 2 is different from Embodiment 1 in that the wastewater treatment unit 32 includes a vibration unit 70. Hereinafter, the vibration unit 70 will be mainly explained.

The vibration unit 70 is a unit configured to vibrate the inclined tubes 47 (inclined tube group 43) of the settling separation portion 40. The vibration unit 70 vibrates the inclined tubes 47 by using, as a vibration source, vibrations generated when the diesel engine 10 operates. Specifically, the vibration unit 70 includes a coupling member 71 coupling the diesel engine 10 and the settling separation portion 40. Since the settling separation portion 40 is coupled to the diesel engine 10 as above, the vibrations of the diesel engine 10 are transferred to the settling separation portion 40, and therefore, transferred to the inclined tubes 47.

Since the vibration unit 70 vibrates the inclined tubes 47 as above, the following effect is obtained. To be specific, as described above, when the particulate matter settled down on the inclined surfaces 48 of the inclined tubes 47 is accumulated to some degree, that particulate matter falls down on the bottom surface 44 of the water tank 41 by its own weight. However, all the particulate matter does not fall down. If no measures are taken, the accumulated particulate matter may not fall down to clog in the inclined tubes 47. This is a phenomenon caused since the particulate matter receives high frictional force from the inclined surfaces 48 in spite of its mass. In contrast, in the present embodiment, since the vibration unit 70 vibrates the inclined tubes 47, the falling of the accumulated particulate matter down to the bottom surface 44 of the water tank 41 is accelerated. With this, the particulate matter hardly clogs in the inclined tubes 47, and the deterioration of the function of the settling separation portion 40 can be prevented.

In the present embodiment, the vibrations generated when the diesel engine 10 operates are used as the vibration source of the vibration unit 70. Therefore, the inclined tubes 47 can be vibrated without using an additional vibration device or the like. On this account, the configuration of the wastewater treatment unit 32 can be simplified. The present embodiment has explained a case where the diesel engine 10 and the settling separation portion 40 are coupled to each other by the coupling member 71. However, for example, the vibrations of the diesel engine 10 may be transferred to the settling separation portion 40 (inclined tubes 47) by providing the diesel engine 10 and the settling separation portion 40 on the same floor.

Embodiment 3

Next, Embodiment 3 will be explained. A ship 300 according to the present embodiment is basically the same as a ship 200 according to Embodiment 2 except for the configuration of the settling separation portion 40. Hereinafter, the settling separation portion 40 of the present embodiment will be mainly explained.

Fig. 8 is a schematic diagram of the settling separation portion 40 according to the present embodiment. As shown in Fig. 8, as with the settling separation portion 40 according to Embodiment 2, the settling separation portion 40 according to the present embodiment is mainly constituted by the water tank 41, the partition plate 42, and the inclined tube group 43. The water tank 41 of the present embodiment includes a top plate portion 51, a first water storage tube 52, and a second water storage tube 53, which are not included in the water tank 41 of Embodiment 2.

The top plate portion 51 is a member that covers the inside of the water tank 41 from above. In the present embodiment, the top plate portion 51 spreads so as to cover the entire upper surface of the water tank 41 including the region above the inclined tube group 43, that is, the second region 46 and the first region 45. Each of the first water storage tube 52 and the second water storage tube 53 is a member extending upward from the top plate portion 51. The first water storage tube 52 is provided at a position corresponding to the first region 45 of the top plate portion 51. The second water storage tube 53 is provided at a position corresponding to the second region 46 of the top plate portion 51. Air vent valves 54 configured to allow air to flow therethrough but not to allow liquids to flow therethrough are respectively attached to the first water storage tube 52 and the second water storage tube 5. Each of the air vent valves 54 may be configured to automatically or manually remove the air in the water tank 41 (the first water storage tube 52 and the second water storage tube). Further, the second water storage tube 53 is provided with the outflow port 50.

The settling separation portion 40 of the present embodiment includes the above components. In addition, the settling separation portion 40 of the present embodiment is configured such that a water surface (free water surface) of the scrubber wastewater in the water tank 41 is positioned in the water storage tubes 52 and 53. Specifically, the scrubber wastewater is supplied to the settling separation portion 40 by using a pump (not shown). Since discharge pressure of the pump is adjusted to become equal to or higher than certain pressure, the water surface of the scrubber wastewater is positioned in the water storage tubes 52 and 53 located above the top plate portion 51. In a case where the outflow port 50 is formed at a position lower than the top plate portion 51, resistance at the outflow port 50 needs to be adjusted by, for example, providing a valve at the outflow port 50. However, according to the present embodiment, since the outflow port 50 is formed above the top plate portion 51, an adjusting operation of positioning the water surface of the scrubber wastewater in the water storage tubes 52 and 53 can be relatively easily performed.

As above, the settling separation portion 40 of the present embodiment is configured such that the water surface of the scrubber wastewater is positioned in the water storage tubes 52 and 53. According to the above configuration, the following operational advantages can be obtained. That the water surface of the scrubber wastewater is positioned in the water storage tubes 52 and 53 means that the water surface is not formed (there is no gas-liquid interface) under the top plate portion 51. Here, as explained in Embodiment 2, the diesel engine 10 and the settling separation portion 40 are coupled to each other, and the vibrations of the diesel engine 10 are transferred to the settling separation portion 40. When the vibrations are transferred to the settling separation portion 40, the water surface of the scrubber wastewater in the settling separation portion 40 (water tank 41) significantly trembles. If the water surface of the scrubber wastewater spreads over the entire water tank 41, the trembling of the water surface is transferred to the inside of the scrubber wastewater, and this causes bad influences on the sinking of the particulate matter. In contrast, in the present embodiment, since the water surface is not formed under the top plate portion 51, the influences due to the trembling of the water surface can be suppressed to a minimum level.

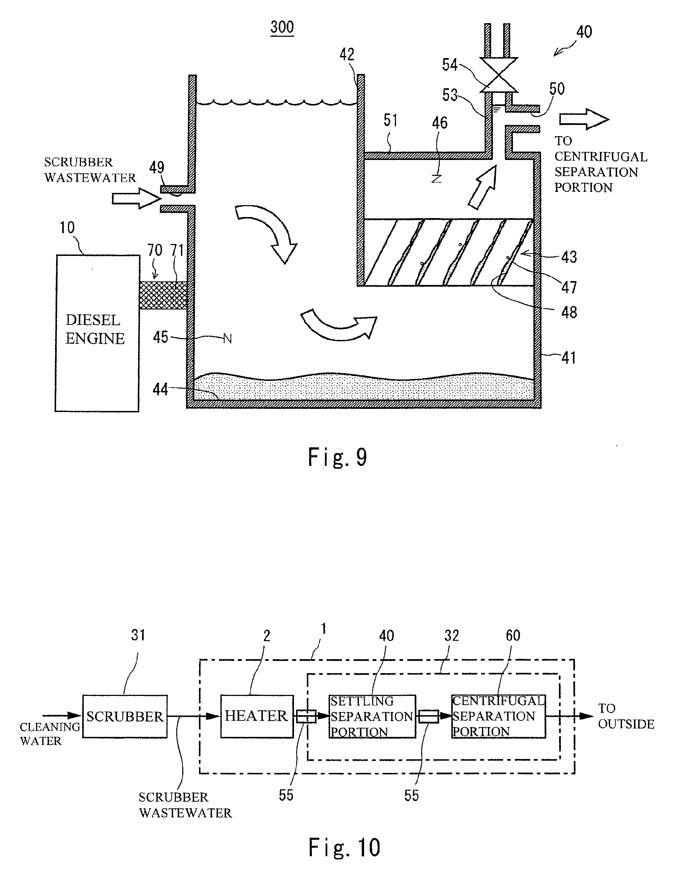

In the case of vibrating the settling separation portion 40 (inclined tubes 47) as above, it is extremely effective to position the water surface of the scrubber wastewater in the water storage tubes 52 and 53. The settling separation portion 40 may have the configuration shown in Fig. 9 instead of the configuration shown in Fig. 8. Fig. 9 is a diagram showing Modification Example of Fig. 8. According to the water tank 41 of the settling separation portion 40 shown in Fig. 9, the top plate portion 51 is located only above the inclined tube group 43, that is, covers only the second region 46, and does not include the first water storage tube 52. Even in the case of this configuration, the trembling of the scrubber wastewater in the second region 46 can be suppressed, so that the influences of this trembling on the sinking of the particulate matter can be suppressed.

The foregoing has explained Embodiments 2 and 3. The above-described wastewater treatment unit 32 treats the scrubber wastewater having been used to clean the exhaust gas of the diesel engine 10. However, for example, the wastewater treatment unit 32 may treat the scrubber wastewater having been used to clean the exhaust gas of the boiler or the exhaust gas of the incinerator. In this case, a vibration device or the like may be used as the vibration source of the vibration unit 70, or the vibrations of an existing rotary device may be used as the vibration source.

Further, even in a case where the wastewater treatment unit 32 treats the scrubber wastewater having been used to clean the exhaust gas of the diesel engine 10, the settling separation portion 40 is provided, in some cases, at a position to which the vibrations of the diesel engine 10 are hardly transferred. In this case, the vibration unit 70 may vibrate the inclined tubes 47 by using as the vibration source the oscillations generated when the ship 100 operates, instead of or together with the vibrations of the diesel engine 10.

Embodiment 4

Next, Embodiment 4 will be explained. Fig. 10 is a block diagram of a wastewater treatment system 1 according to the present embodiment. As shown in Fig. 10, the wastewater treatment system 1 according to the present embodiment is mainly constituted by a heater 2 and the above-described wastewater treatment unit 32.

The heater 2 is a device configured to heat the scrubber wastewater to not lower than a predetermined temperature. For example, the heater 2 heats the scrubber wastewater to not lower than 75°C. A heat source of the heater 2 is not especially limited. The scrubber wastewater may be heated by using an electric heater, high-temperature steam, or the heat of the exhaust gas. In the present embodiment, the heater 2 is provided downstream of the scrubber 31. However, the heater 2 may be provided upstream of the scrubber 31 or may be provided in the scrubber 31. To be specific, the heater 2 may heat the scrubber wastewater before the scrubber wastewater contains the particulate matter (i.e., the heater 2 may heat the clean water before use). The heater 2 may heat the scrubber wastewater while the scrubber wastewater is containing the particulate matter. The heater 2 may heat the scrubber wastewater after the scrubber wastewater has contained the particulate matter. As above, the scrubber wastewater is only required to be heated at at least one of the above timings. The scrubber wastewater heated by the heater 2 is supplied to the wastewater treatment unit 32.

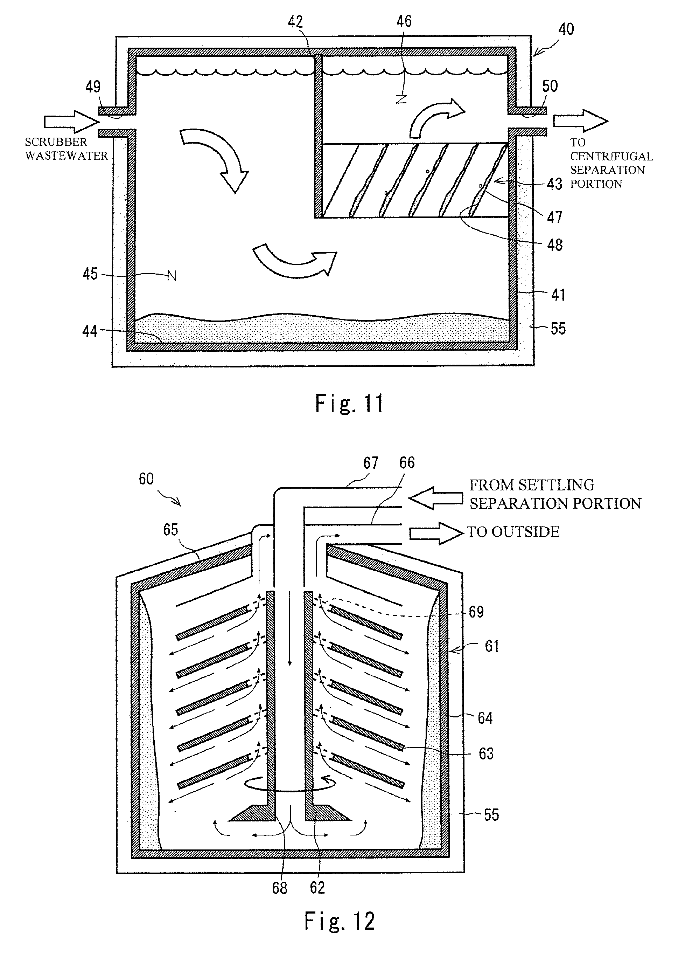

As with the wastewater treatment unit 32 explained above, the wastewater treatment unit 32 includes the settling separation portion 40 and the centrifugal separation portion 60. It should be noted that the settling separation portion 40 of the present embodiment includes a device keep-warm portion 55. The device keep-warm portion 55 is a member configured to keep warm the scrubber wastewater in the wastewater treatment unit 32. Here, the device keep-warm portion 55 keeps warm the scrubber wastewater in the settling separation portion 40. As shown in Fig. 11, the device keep-warm portion 55 is provided so as to cover an outer surface of the water tank 41. The device keep-warm portion 55 is formed by a publicly known heat insulating material. The device keep-warm portion 55 may be configured such that: an outer wall provided outside the water tank 41 is included; and the heat in the water tank 41 is hardly transferred to the outside by a vacuum space formed between the outer wall and the water tank 41. In order to maintain (or increase) the temperature of the scrubber wastewater in the water tank 41, the device keep-warm portion 55 may be configured to be able to apply heat (for example, generate heat) to the scrubber wastewater in the water tank 41. Since the device keep-warm portion 55 configured as above is included, the settling separation portion 40 can perform the wastewater treatment while maintaining the scrubber wastewater, heated by the heater 2, at a desired temperature.

The centrifugal separation portion 60 of the present embodiment also includes the device keep-warm portion 55. The device keep-warm portion 55 is a member configured to keep warm the scrubber wastewater in the wastewater treatment unit 32. Here, the device keep-warm portion 55 keeps warm the scrubber wastewater in the centrifugal separation portion 60. As shown in Fig. 12, the device keep-warm portion 55 is provided so as to cover an outer surface of the housing 61. The device keep-warm portion 55 is the same as that used in the settling separation portion 40 and is formed by a publicly known heat insulating member. The device keep-warm portion 55 may be configured to have a dual structure or may be configured to be able to apply heat to the scrubber wastewater. Since the device keep-warm portion 55 configured as above is included, the wastewater treatment can be performed while maintaining the scrubber wastewater, heated by the heater 2, at a desired temperature.

As an example in which the device keep-warm portion 55 keeps warm the scrubber wastewater in the wastewater treatment unit 32, the foregoing has explained a case where the device keep-warm portion 55 keeps warm the scrubber wastewater in the settling separation portion 40 and a case where the device keep-warm portion 55 keeps warm the scrubber wastewater in the centrifugal separation portion 60. The device keep-warm portion 55 also keeps warm the scrubber wastewater in pipes and the like in the wastewater treatment unit 32 in addition to the scrubber wastewater in the settling separation portion 40 and the centrifugal separation portion 60. For example, as shown in Fig. 10, the device keep-warm portion 55 is provided so as to cover the outer surface of a pipe extending from the heater 2 to the settling separation portion 40 and the outer surface of a pipe extending from the settling separation portion 40 to the centrifugal separation portion 60 and also keeps warm the scrubber wastewater flowing through these pipes.

Effects by Heating

As described above, according to the wastewater treatment system 1 of the present embodiment, the scrubber wastewater is heated before the wastewater treatment is performed. The following will explain the effects obtained by this heating. Before explaining these effects, a relation among the flocculation and dispersion of particles and temperatures based on the generally known DLVO theory will be explained. According to the DLVO theory, the flocculation and dispersion of water insoluble particles in water is determined by a difference (sum total) between inter-particle repulsion energy $E_1$ and inter-particle attraction energy $E_2$. For example, in a case where the inter-particle repulsion energy $E_1$ is higher than the inter-particle attraction energy $E_2$, the particles disperse. In a case where the inter-particle repulsion energy $E_1$ is lower than the inter-particle attraction energy $E_2$, the particles flocculate.

The inter-particle repulsion energy $E_1$ can be represented by Formula 1 (and Formula 2) below. The inter-particle attraction energy $E_2$ can be represented by Formula 3 below. According to Formulas 1 and 2, when an absolute temperature T of water increases, the inter-particle repulsion energy $E_1$ increases. In contrast, the inter-particle attraction energy $E_2$ is not influenced by the absolute temperature T of the water. Therefore, according to the DLVO theory, when the absolute temperature T of a liquid increases, it is difficult for the particulate matter to flocculate in water.

**Math. 1**

$$E_1 = \frac{\varepsilon a \Phi^2}{2} In(1 + \exp(-kH)) \quad \dots \quad \text{Formula 1}$$

$$k = \frac{4\pi e^2 \cdot \sum n_i Z_i^2}{DKT} \quad \dots \quad \text{Formula 2}$$

$$E_2 = -\frac{a}{12} \cdot \frac{1}{H} \quad \dots \quad \text{Formula 3}$$

$E_1$: Electric repulsion energy
$E_2$: Attraction energy of London-van der Waals force
$\varepsilon$: Dielectric constant of water
a: Radius of particle
$\Phi$: Zeta potential
1/k: Debye radius
H: Distance between particles
T: Absolute temperature
E: Unit charge

According to the settling separation portion 40 and the centrifugal separation portion 60, if the flocculation capacity of the particles (particulate matter) deteriorates, the treatment ability decreases, and if the flocculation capacity improves, the treatment ability improves.

This is because the sinking velocity of the particles increases in proportion to the square of the particle diameter. The settling separation portion 40 causes the particles (particulate matter) to sink by gravity, and the centrifugal separation portion 60 causes the particles (particulate matter) to sink by centrifugal force. Therefore, the sinking velocity of the particulate matter influences the wastewater treatment ability. To be specific, in the settling separation portion 40 and the centrifugal separation portion 60, the particulate matter hardly sinks by the deterioration of the flocculation capacity of the particulate matter. As a result, the treatment ability deteriorates.

As described above, according to the DLVO theory, when the absolute temperature T of the scrubber wastewater increases, the ability of the wastewater treatment unit deteriorates. However, a result different from this was obtained by an experiment conducted by the present inventors. In this experiment, a relation between the temperature of the scrubber wastewater and the treatment ability of the settling separation portion 40 was verified by using a single inclined tube inclined at 60° relative to the horizontal direction. Results shown in Table 1 below were obtained by this experiment. To be specific, when the scrubber wastewater whose turbidity was 658 NTU (Nephelometric Turbidity Units) was subjected to the wastewater treatment at a normal temperature of 25°C, the turbidity thereof became 80 to 90 NTU. On the other hand, when the scrubber wastewater whose turbidity was 658 NTU was heated to 80°C to 90°C and then subjected to the wastewater treatment, the turbidity thereof was reduced to 20 to 30 NTU.

Table 1

| Temperature of scrubber wastewater | Turbidity before treatment | Turbidity after treatment |
|---|---|---|
| 25°C | 658 NTU | 80 to 90 NTU |
| 80°C to 90°C | 658 NTU | 20 to 30 NTU |

Further, an experiment was conducted by using a centrifugal separator, and a relation between the temperature of the scrubber wastewater and the treatment ability of the centrifugal separation portion was also verified. In this experiment, an OSD2 continuous disc type centrifugal separator produced by Westfalia Separator Japan K.K. was used. This centrifugal separator was operated for three minutes at a flow rate of 100 L/Hr. Results shown in Table 2 were obtained by this experiment. To be specific, when the scrubber wastewater whose turbidity was 1,875 NTU was heated to 6°C, 30°C, 50°C, and 75°C and then subjected to the wastewater treatment, the turbidity thereof after the treatment became 81 NTU, 51 NTU, 36NTU, and 20 NTU.

**Table 2**

| Temperature of scrubber wastewater | Turbidity before treatment | Turbidity after treatment |
|---|---|---|
| 6°C | 1,875 NTU | 81 NTU |
| 30°C | 1,875 NTU | 51 NTU |
| 50°C | 1,875 NTU | 36 NTU |
| 75°C | 1,875 NTU | 20 NTU |

As above, it was confirmed that in both the wastewater treatment using gravity and the wastewater treatment using the centrifugal force, the treatment ability improves as the temperature of the scrubber wastewater increases. Therefore, according to the wastewater treatment system 1 of the present embodiment, since the heater 2 heats the scrubber wastewater, and the wastewater treatment unit 32 performs the wastewater treatment while maintaining the temperature of the scrubber wastewater by the device keep-warm portion 55, the particulate matter can be removed highly efficiently.

As above, contrary to the DLVO theory, obtained was the result in which the ability of the wastewater treatment improves as the temperature of the scrubber wastewater increases. The present inventors presume that this is because of Brownian motion of the particles. To be specific, kinetic energy $E_3$ of the particles is represented by Formula 4 below, and the kinetic energy $E_3$ of the particles increases as the absolute temperature T of the water increases. Therefore, it is thought that when the Brownian motion of the particles becomes active, the number of collisions of the particles increases, and this accelerates the flocculation. To be specific, it is thought that the influences by the kinetic energy $E_3$ of the particles are stronger than the influences by the inter-particle repulsion energy $E_1$, and this improves the flocculation capacity of the particles. As a result, it is presumed that the ability of the wastewater treatment improves as the temperature of the scrubber wastewater increases.

Math. 2

$$E_3 = \frac{3}{2} KT \quad \dots \quad \text{Formula 4}$$

$E_3$: Kinetic energy of particles (related to Brownian motion)
T: Absolute temperature
K: Boltzman's constant

EP 2 862 608 A1

**Embodiment 5**

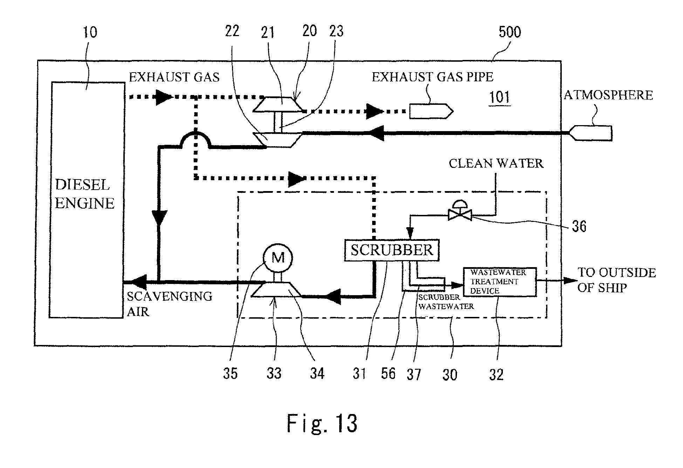

Next, Embodiment 5 will be explained. Fig. 13 is a block diagram of an engine system according to the present embodiment. As shown in Fig. 13, the exhaust gas recirculation unit 30 according to the present embodiment includes an adjusting valve 36.

The adjusting valve 36 is a valve configured to adjust the flow rate of the clean water, supplied to the scrubber 31, to adjust the temperature of the scrubber wastewater. As described above, in the scrubber 31, the exhaust gas is cleaned by the wash water. At this time, the heat exchange is performed between the exhaust gas and the wash water (scrubber wastewater). To be specific, in the scrubber 31, the wash water (scrubber wastewater) is heated by the heat of the exhaust gas. At this time, by increasing the flow rate of the clean water by the adjusting valve 36, the temperature increase of the scrubber wastewater slows down, and by decreasing the flow rate of the clean water by the adjusting valve 36, the temperature increase of the scrubber wastewater accelerates. By adjusting the adjusting valve 36 as above, the temperature of the heated scrubber wastewater can be set arbitrarily. The present embodiment may be configured such that: a temperature sensor (not shown) is provided downstream of the scrubber 31; and the opening degree of the adjusting valve 36 is adjusted based on the temperature of the scrubber wastewater obtained from the temperature sensor.

The ability of the wastewater treatment tends to improve as the temperature of the scrubber wastewater increases. As shown in Table 2, etc., when the scrubber wastewater is heated to at least about 75°C, the wastewater treatment unit 32 can achieve the adequately high ability. Therefore, it is preferable to heat the scrubber wastewater to not lower than 75°C. If the scrubber wastewater vaporizes, the exhaust gas recirculation unit 30 becomes meaningless, so that the temperature of the scrubber wastewater needs to be kept lower than 100°C in practice.

A coupling portion 37 coupling the scrubber 31 and the wastewater treatment unit 32 may be constituted only by a pipe. However, the coupling portion 37 may include a tank which is used for adding a flocculant to the scrubber wastewater and serves as a buffer. A coupling portion keep-warm portion 56 is attached to an outer surface of the coupling portion 37. In a case where the coupling portion 37 includes the tank, the coupling portion keep-warm portion 56 is also attached to the tank. As with the device keep-warm portion 55, the coupling portion keep-warm portion 56 is formed by a publicly known heat insulating member and can keep warm the scrubber wastewater in the coupling portion 37. The coupling portion keep-warm portion 56 may be configured to have a dual structure or may be configured to be able to apply heat to the scrubber wastewater. Since the coupling portion keep-warm portion 56 is attached to the coupling portion 37 as above, the scrubber wastewater heated by the heater 2 can be supplied to the wastewater treatment unit 32 while maintaining the scrubber wastewater at a desired temperature.

The foregoing has explained the exhaust gas recirculation unit 30 according to Embodiments 4 and 5. As explained in Embodiment 4, in the case of utilizing the wastewater treatment unit configured to separate and remove the particulate matter from the scrubber wastewater, the treatment ability thereof can be improved by heating the scrubber wastewater. In Embodiment 5, the scrubber wastewater is heated to not lower than the predetermined temperature in the scrubber 31, the heated scrubber wastewater is supplied to the wastewater treatment unit 32 while keeping warm the scrubber wastewater by the coupling portion keep-warm portion 56, and the wastewater treatment unit 32 treats the scrubber wastewater while maintaining the high temperature of the scrubber wastewater. Therefore, the particulate matter can be removed from the scrubber wastewater highly efficiently.

Since the scrubber 31 of Embodiment 5 heats the scrubber wastewater, it corresponds to the heater 2 of Embodiment 4. Since the scrubber 31 corresponds to the heater 2, it can be said that the exhaust gas recirculation unit 30 according to Embodiment 5 includes the wastewater treatment system 1 according to Embodiment 4.

Each of Embodiments 4 and 5 has explained a case where the wastewater treatment unit 32 includes the settling separation portion 40 and the centrifugal separation portion 60. However, instead of the settling separation portion 40 and the centrifugal separation portion 60, a separation portion including a filter may be used. The flocculation of the particulate matter accelerates as the temperature of the scrubber wastewater increases. Therefore, the ability of the wastewater treatment improves even by the separation portion including the filter.

The foregoing has explained the embodiments of the present invention in reference to the drawings. However, specific configurations are not limited to these embodiments. Design changes and the like within the scope of the present invention are included in the present invention.

Industrial Applicability

The wastewater treatment unit according to the present invention can operate with low energy, is easy to maintenance, can be reduced in its installation space, and can remove the particulate matter from the scrubber wastewater with a high degree of accuracy. Therefore, the present invention is useful in a technical field of wastewater treatment units.

13

**Reference Signs List**

| | |
|---|---|
| 1 | wastewater treatment system |
| 2 | heater |
| 10 | diesel engine |
| 30 | exhaust gas recirculation unit |
| 31 | scrubber |
| 32 | wastewater treatment unit |
| 37 | coupling portion |
| 40 | settling separation portion |
| 41 | water tank |
| 47 | inclined tube |
| 48 | inclined surface |
| 50 | outflow port |
| 51 | top plate portion |
| 52 | first water storage tube |
| 53 | second water storage tube |
| 54 | air vent valve |
| 55 | device keep-warm portion |
| 56 | coupling portion keep-warm portion |
| 60 | centrifugal separation portion |
| 70 | vibration unit |
| 100 | ship |
| 101 | engine system |

**Claims**

1. A wastewater treatment unit configured to remove particulate matter from scrubber wastewater containing the particulate matter,
   the wastewater treatment unit comprising:

   a settling separation portion including an inclined surface inclined at a predetermined angle relative to a horizontal direction, the settling separation portion being configured to settle down the particulate matter on the inclined surface to separate the particulate matter from the scrubber wastewater; and
   a centrifugal separation portion provided downstream of the settling separation portion, the centrifugal separation portion being configured to separate the particulate matter from the scrubber wastewater by a centrifugal separation treatment.

2. An exhaust gas recirculation unit configured to return an exhaust gas of a diesel engine to the diesel engine,
   the exhaust gas recirculation unit comprising:

   a scrubber configured to clean the exhaust gas to discharge scrubber wastewater; and
   the wastewater treatment unit according to claim 1, configured to remove the particulate matter from the scrubber wastewater discharged from the scrubber.

3. A wastewater treatment unit configured to remove particulate matter from scrubber wastewater containing the particulate matter,
   the wastewater treatment unit comprising a settling separation portion configured to settle down the particulate matter to separate the particulate matter from the scrubber wastewater, wherein
   the settling separation portion includes:

   a water tank into which the scrubber wastewater flows;
   a plurality of inclined tubes, which are provided in the water tank such that lower end portions thereof are located above a bottom surface of the water tank and through which the scrubber wastewater flows; and
   a vibration unit configured to vibrate the plurality of inclined tubes.

4. The wastewater treatment unit according to claim 3, wherein:

the water tank includes

a top plate portion located above the inclined tubes, and
a water storage tube extending upward from the top plate portion; and

the water tank is configured such that a water surface of the scrubber wastewater is positioned in the water storage tube.

5. The wastewater treatment unit according to claim 4, wherein the water storage tube is provided with an outflow port through which the scrubber wastewater having flowed through the inclined tubes is discharged.

6. The wastewater treatment unit according to claim 5, wherein the water tank further includes an air vent valve attached to the water storage tube and configured to manually or automatically discharge air in the water tank.

7. An exhaust gas recirculation unit configured to return an exhaust gas of a diesel engine to the diesel engine, the exhaust gas recirculation unit comprising:

a scrubber configured to clean the exhaust gas to discharge scrubber wastewater; and
the wastewater treatment unit according to any one of claims 3 to 6, configured to remove the particulate matter from the scrubber wastewater discharged from the scrubber, wherein
the vibration unit vibrates the plurality of inclined tubes by using, as a vibration source, vibrations generated when the diesel engine operates.

8. A ship comprising an engine system,
the engine system including a diesel engine and an exhaust gas recirculation unit configured to return an exhaust gas of the diesel engine to the diesel engine, wherein:

the exhaust gas recirculation unit includes

a scrubber configured to clean the exhaust gas to discharge scrubber wastewater, and
the wastewater treatment unit according to any one of claims 3 to 6, configured to remove the particulate matter from the scrubber wastewater discharged from the scrubber; and

the vibration unit vibrates the plurality of inclined tubes by using, as a vibration source, oscillations generated when the ship operates.

9. A wastewater treatment system comprising a wastewater treatment unit configured to separate and remove particulate matter from scrubber wastewater containing the particulate matter,
the wastewater treatment system being configured to heat the scrubber wastewater to not lower than a predetermined temperature at at least one of a timing before the scrubber wastewater contains the particulate matter, a timing while the scrubber wastewater is containing the particulate matter, and a timing after the scrubber wastewater contains the particulate matter, and supply the heated scrubber wastewater to the wastewater treatment unit.

10. An exhaust gas recirculation unit configured to return an exhaust gas of a diesel engine to the diesel engine, the exhaust gas recirculation unit comprising:

a scrubber configured to clean the exhaust gas to discharge scrubber wastewater; and
a wastewater treatment unit configured to separate and remove particulate matter from the scrubber wastewater, wherein
the scrubber wastewater is heated in the scrubber by heat of the exhaust gas to not lower than a predetermined temperature, and the heated scrubber wastewater is supplied to the wastewater treatment unit.

11. The exhaust gas recirculation unit according to claim 10, further comprising:

a coupling portion coupling the scrubber and the wastewater treatment unit; and
a coupling portion keep-warm portion configured to keep warm the scrubber wastewater in the coupling portion.

**12.** The exhaust gas recirculation unit according to claim 10 or 11, further comprising a device keep-warm portion configured to keep warm the scrubber wastewater in the wastewater treatment unit.

**13.** The exhaust gas recirculation unit according to any one of claims 10 to 12, wherein the scrubber wastewater is heated in the scrubber to not lower than 75°C.

**14.** An engine system comprising:

a diesel engine; and
the exhaust gas recirculation unit according to any one of claims 2, 7, and 10 to 13.

**15.** A ship comprising the engine system according to claim 14.

10  22 21 20 23  100

EXHAUST GAS  EXHAUST GAS PIPE  101  ATMOSPHERE

DIESEL
ENGINE

CLEAN WATER

SCRUBBER

M

WASTEWATER
TREATMENT
DEVICE

TO OUTSIDE
OF SHIP

SCAVENGING
AIR

SCRUBBER
WASTEWATER

35  33  34  31  30  32

Fig. 1

31  40  32  60

SCRUBBER

SCRUBBER
WASTEWATER

SETTLING
SEPARATION
PORTION

CENTRIFUGAL
SEPARATION
PORTION

TO OUTSIDE
OF SHIP

Fig. 2

Fig. 3

Fig. 4

Fig. 5

Fig. 6

Fig. 7

Fig. 8

Fig. 9

Fig. 10

Fig. 11

Fig. 12

Fig. 13

<table>
<tr><td colspan="2"><strong>INTERNATIONAL SEARCH REPORT</strong></td><td>International application No.<br>PCT/JP2013/003628</td></tr>
</table>

**A.  CLASSIFICATION OF SUBJECT MATTER**
*B01D21/02*(2006.01)i, *B01D21/26*(2006.01)i, *B01D47/00*(2006.01)i, *B01D47/02*
(2006.01)i, *B01D47/06*(2006.01)i, *B63H21/32*(2006.01)i, *F02M25/07*(2006.01)i,
*B63B25/08*(2006.01)n, *B63J2/08*(2006.01)n
According to International Patent Classification (IPC) or to both national classification and IPC

**B.  FIELDS SEARCHED**

Minimum documentation searched (classification system followed by classification symbols)
B01D21/02, B01D21/26, B01D47/00, B01D47/02, B01D47/06, B63H21/32,
F02M25/07, B63B25/08, B63J2/08

Documentation searched other than minimum documentation to the extent that such documents are included in the fields searched
Jitsuyo Shinan Koho          1922-1996   Jitsuyo Shinan Toroku Koho   1996-2013
Kokai Jitsuyo Shinan Koho    1971-2013   Toroku Jitsuyo Shinan Koho   1994-2013

Electronic data base consulted during the international search (name of data base and, where practicable, search terms used)

**C.  DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2004-081933 A  (Mitsubishi Heavy Industries,<br>Ltd.),<br>18 March 2004 (18.03.2004),<br>claims; fig. 1 to 3<br>(Family: none) | 9,10,14,15<br>1,2<br>3-8,11-13 |
| X<br>Y<br>A | JP 2003-502138 A  (Thermoselect AG),<br>21 January 2003 (21.01.2003),<br>claims; paragraphs [0012], [0018]; fig. 2<br>& JP 4684506 B            & EP 1191991 A<br>& WO 2000/078425 A1       & DE 19928600 C<br>& AU 6150100 A | 9<br>1-3<br>4-8,10-15 |
| Y | JP 51-028263 A  (Kajima Doro Kabushiki Kaisha),<br>10 March 1976 (10.03.1976),<br>fig. 1, 2<br>& DE 2538187 A | 1,2 |

| ☒ | Further documents are listed in the continuation of Box C. | ☐ | See patent family annex. |
|---|---|---|---|

*      Special categories of cited documents:
"A"   document defining the general state of the art which is not considered   to be of particular relevance
"E"   earlier application or patent but published on or after the international filing date
"L"   document which may throw doubts on priority claim(s) or which is cited to establish the publication date of another citation or other special reason (as specified)
"O"   document referring to an oral disclosure, use, exhibition or other means
"P"   document published prior to the international filing date but later than the priority date claimed

"T"   later document published after the international filing date or priority date and not in conflict with the application but cited to understand the principle or theory underlying the invention
"X"   document of particular relevance; the claimed invention cannot be considered novel or cannot be considered to involve an inventive step when the document is taken alone
"Y"   document of particular relevance; the claimed invention cannot be considered to involve an inventive step when the document is combined with one or more other such documents, such combination being obvious to a person skilled in the art
"&"   document member of the same patent family

| Date of the actual completion of the international search<br>    30 August, 2013 (30.08.13) | Date of mailing of the international search report<br>    10 September, 2013 (10.09.13) |
|---|---|
| Name and mailing address of the ISA/<br>    Japanese Patent Office | Authorized officer |
| Facsimile No. | Telephone No. |

Form PCT/ISA/210 (second sheet) (July 2009)

**INTERNATIONAL SEARCH REPORT**

| International application No. |
| --- |
| PCT/JP2013/003628 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y | JP 53-025973 A (Kobe Steel, Ltd.), 10 March 1978 (10.03.1978), claims; drawings (Family: none) | 1,2 |
| Y | JP 07-189658 A (Katsuro YASHIMA), 28 July 1995 (28.07.1995), claims; fig. 1 to 7 (Family: none) | 1,2 |
| Y | JP 62-079814 A (Kawasaki Heavy Industries, Ltd.), 13 April 1987 (13.04.1987), fig. 1, 2 (Family: none) | 3 |
| A | WO 2011/104302 A1 (ALFA LAVAL CORPORATE AB), 01 September 2011 (01.09.2011), entire text; all drawings & US 2013/0037493 A1    & US 2013/0157833 A1 & EP 2364760 A1        & EP 2402288 A1 & EP 2539281 A          & WO 2012/000790 A1 & CN 102762502 A        & SG 183495 A & KR 10-2012-0125504 A  & CA 2802965 A & CN 102958847 A        & SG 186450 A & KR 10-2013-0031305 A | 1-15 |
| A | JP 08-511074 A (Man B & W Diesel A/S), 19 November 1996 (19.11.1996), entire text; all drawings & US 5657630 A          & EP 701656 A & WO 1994/029587 A1     & DE 69318578 C & DE 69318578 D          & DK 65093 A & FI 955802 A | 1-15 |
| A | JP 2004-034018 A (Rafael Vidal Fernandez), 05 February 2004 (05.02.2004), entire text; all drawings & US 2003/0053942 A1     & EP 1297883 A2 & CA 2397221 A           & BR 203240 A & AR 35090 A             & PE 2972003 A & CA 2397221 A1 | 1-15 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004081933 A
- JP 2001276844 A
- JP 2002346581 A